# EUROPÄISCHE PATENTANMELDUNG

(11) **EP 1 080 962 A2**
(43) Veröffentlichungstag der Anmeldung: **07.03.2001**
(21) Anmeldenummer: 00118963.8
(22) Anmeldetag: 01.09.2000
(51) Int. Cl.: B60J 7/043

(54) **Deckel eines öffnungsfähigen Fahrzeugdachs mit in seinen Kunststoffrahmen eingebettetem Heizelement**

(30) Priorität: 03.09.1999 DE 19942038
(71) Anmelder: Webasto Vehicle Systems International GmbH, 82131 Stockdorf (DE)
(72) Erfinder: Jardin, Hans, 82266 Inning/Bachern (DE); Kölbl, Michael, 82061 Neuried (DE)
(74) Vertreter: Wiese, Gerhard

(57) **Zusammenfassung**

Die Erfindung betrifft einen Deckel (2) eines öffnungsfähigen Fahrzeugdaches (1) mit einer Deckelplatte (3) und einem randseitig an die Deckelplatte (3) gespritzten bzw. geschäumten, umlaufenden Kunststoffrahmen (8) mit einer Randspaltdichtung (5). Erfindungsgemäß ist vorgesehen, daß in den Kunststoffrahmen (8) zumindest ein Heizelement (13, 14, 15, 16, 17, 18) integriert ist.

## Beschreibung

Die Erfindung betrifft einen Deckel eines öffnungsfähigen Fahrzeugdaches mit einer Deckelplatte und einem randseitig an die Deckelplatte gespritzten bzw. geschäumten, umlaufenden Kunststoffrahmen mit einer Randspaltdichtung.

Ein derartiger Deckel ist beispielsweise aus der DE 197 20 389 C1 bekannt. Beim Einfrieren eines derartigen Deckels, beispielsweise in der kalten Jahreszeit im Dachausschnitt ist die Verstellfunktion des Deckels nicht mehr gewährleistet. In dem Fall, dass der Deckel noch beweglich ist, besteht jedoch die Gefahr, dass die um die Deckelplatte oder am Rand der Dachöffnung umlaufende Dichtung hierbei beschädigt wird, weil sie zumindest partiell festgefroren ist. Ein weiterer Nachteil eines derartigen Deckels, der üblicherweise aus Glas oder Kunststoff besteht, besteht in seiner mäßigen Wärmeisolation. So wird in die Fahrgastzelle abgestrahlte Kälte im Kopfbereich von insbesondere Fahrer und Beifahrer als sehr unangenehm empfunden. Nutzer schließen deshalb häufig den unter dem Glasdeckel vorgesehenen Schiebehimmel und reduzieren damit den ansonsten vorhandenen Nutzen eines Glasdachs in Form eines zusätzlichen Lichteinfalls von oben erheblich.

Aus der DE 35 00 436 A1 ist ein Glasklappdach bekannt, das aus einer Glasplatte besteht, die am Rand umlaufend ein Dichtungsprofil trägt. In dieses Dichtungsprofil ist zumindest ein Heizdraht in unmittelbarer Nachbarschaft zum Randspalt zwischen Glasdeckel und Dachausschnitt eingesetzt, um dem Festfrieren des Glasklappdachs entgegen zu wirken. Nachteilig hierbei ist jedoch, dass der Heizdraht in einem relativ aufwendigen Montageschritt in das Dichtungsprofil eingebracht werden muß, und dass der Heizdraht aufgrund der Elastizität des Dichtungsprofils und seiner eigenen sehr begrenzten Dehnfähigkeit Belastungen ausgesetzt ist, die im ungünstigsten Fall zu einem Reißen des Heizdrahts führen kann.

Aus der DE-AS 12 16 128 ist eine elektrische Heizvorrichtung für eine Kraftfahrzeugtüre bekannt geworden, bei der ein elektrischer Heizdraht einer Heizdrahtwiderstandsheizung in eine Nut des die Türausnehmung umgebenden Türrahmens eingelegt und über einen Betätigungskontakt an eine Fahrzeugbatterie anschliessbar ist.

Angesichts dieses Standes der Technik liegt der Erfindung die Aufgabe zugrunde, einen Deckel eines öffnungsfähigen Fahrzeugdachs der in Rede stehenden Art zu schaffen, der auch in der kalten Jahreszeit funktionstüchtig ist.

Gelöst wird diese Aufgabe durch die Merkmale des Anspruchs 1. Vorteilhafte Weiterbildungen der Erfindung sind in den Unteransprüchen angegeben.

Demnach sieht die Erfindung die Anordnung eines Heizmittels im Kunststoffrahmen des Deckels vor, der soweit verwindungssteif ist, dass das in ihm angeordnete Heizmittel keiner mechanischen Belastung ausgesetzt ist. Außerdem gestattet die Anordnung des Heizmittels im Kunststoffrahmen eine bequeme Montage entweder schon während der Herstellung des Deckels, insbesondere beim Anschäumprozeß des Kunststoffrahmens und gegebenenfalls auch in einem nachfolgenden Montageschritt.

Gemäß einer vorteilhaften Weiterbildung der Erfindung ist eine Vertiefung auf der Unterseite und/oder Außenseite des Kunststoffrahmens vorgesehen, in welche das Heizelement bzw. Heizmittel, vorzugsweise in Gestalt eines Heizdrahts eingeklipst wird. Alternativ kann das Heizelement auch beim Umschäumen direkt mit in das Material des Kunststoffrahmens, und zwar bevorzugt nahe der dem Innenraum zugewandten Unterseite eingebettet werden. Eine Alternative hierzu sieht die Befestigung des Heizelements vorab am Verstärkungsrahmen vor, d.h., bevor das Material des Kunststoffrahmens auf den Verbund aus Verstärkungsrahmen und Deckelplatte aufgeschäumt wird. Die Fixierung des Heizelements am Verstärkungsrahmen kann beispielsweise mittels Kleben erfolgen. Es kann jedoch auch vorgesehen sein, das Heizelement in einer Steckaufnahme unterzubringen und daraufhin die Steckaufnahme auf den Außenrand des Verstärkungsrahmens zu stecken.

Durch eine Anordnung des Heizelements auf der Unterseite des Kunststoffrahmens und damit in Gegenüberlage zum Kopfbereich des Fahrers und Beifahrers, sowie bevorzugt bei einer Ausbildung des Heizelement in Gestalt einer Heizschlange und damit eines "Flächenstrahlers", wird erreicht, dass auch der Wärme empfindliche Kopfbereich erwärmt wird, was zu einer Steigerung des Wohlbefindens von Fahrer bzw. Beifahrer in der kalten Jahreszeit führt, so dass der Schiebehimmel in geöffneter Position verbleiben kann.

Nachfolgend wird die Erfindung anhand der Zeichnung beispielhaft näher erläutert; es zeigen:
- Fig. 1: die perspektivische Draufsicht auf ein öffnungsfähiges Fahrzeugdach mit sich in Schließstellung befindlichem Deckel,
- Fig.2: den Schnitt durch den Deckel im Randbereich entsprechend der Schnittlinie III-III in Fig. 1,
- Fig. 3 bis 5: Schnitte durch den Deckel im Randbereich entsprechend der Schnittlinie II-II mit an unterschiedlichen Stellen des Kunststoffrahmens positionierten Heizelementen.

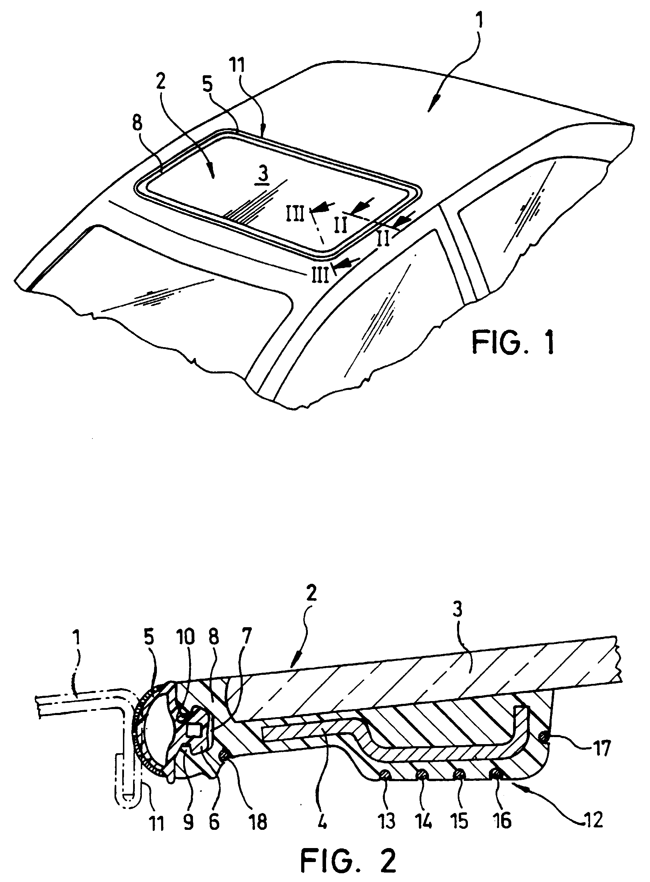

In einem festen Fahrzeugdach 1 ist ein mit 11 bezeichneter Dachausschnitt vorgesehen, der mittels eines insgesamt mit 2 bezeichneten Deckels verschließbar sowie durch Ausstellen von dessen Vorder- oder Hinterkante und/oder Verschieben desselben wenigstens teilweise freilegbar ist. Der Deckel 2 besteht aus einer Deckelplatte 3, die vorzugsweise aus transparentem Material wie Glas hergestellt ist, einem darunter angeordneten Verstärkungsrahmen 4 und einem die beiden Teile 3 und 4 durch Umspritzen verbindenden Kunststoffrahmen 8. Der Kunststoffrahmen 8 weist an seinem nach außen gerichteten Rand eine Nut 7 zur Aufnahme eines Dichtungsprofils 5 auf (siehe Fig. 2). Das Dichtungsprofil 5 greift, wie in Fig. 2 gezeigt, mit einem nach innen, d.h. zur Deckelplatte 3 weisenden Formteil 6 in die Nut 7 des Kunststoffrahmens 8 ein. Das Formteil 6 weist gegenüber liegende Hinterschneidungen 10 auf, die mit zwei komplementär dazu geformten Vorsprüngen 9 am Kunststoffrahmen 8 derart zusammenwirken, dass das Dichtungsprofil 5 fest am Kunststoffrahmen gehalten ist und nur durch kräftiges horizontales Herausziehen im Falle einer eventuell notwendigen Auswechslung nach außen entfernt werden kann. Das Dichtungsprofil 5 bildet eine Randspaltdichtung zur Abdichtung des Deckels 2 gegenüber dem Dachausschnitt 11.

In Fig. 2 ist in den Kunststoffrahmen 8 eine Heizschlange integriert, d.h. ein mäanderförmig verlaufendes Heizelement in Gestalt eines entsprechenden Drahts, wie allgemein mit der Bezugsziffer 12 bezeichnet. Für diese Heizschlange sind aufgrund der Schnittdarstellung Segmente 13, 14, 15, 16 und 17 zu erkennen. Die Heizschlange ist in eine Vertiefung eingebettet, die der Mäanderform der Heizschlange entspricht und an die Kontur des Heizdrahts angepaßt ist. Das heißt, bei zylindrischen Querschnitt des Heizdrahts bzw. der Heizdrahtsegmente 13 bis 17 weist die mäanderförmige Vertiefung im Querschnitt Kreisform auf, und diese Vertiefung mündet in die Außenseite des Kunststoffrahmens 8, über welche der Heizdraht bzw. die Heizschlange zur Montage eingedrückt wird. Für die Position der Heizschlange ist der innen liegende Bereich der Außenseite des Kunststoffrahmens 8 gewählt, so dass die Heizschlange mit den Heizdraht-Segmenten 13, 14, 15 und 16 abwärts, d.h. in Richtung auf einen Fahrer bzw. Fahrgast in der Fahrzeugkabine weist, wobei ein weiteres Heizdraht-Segment 17 am innen liegenden Seitenrand des Kunststoffrahmens 8 angeordnet ist. Zweck der derart positionierten, im Kunststoffrahmen 8 angeordneten Heizschlange ist, speziell den Kopfbereich des Fahrers bzw. Beifahrers schneller aufzuheizen und dadurch entscheidend zum Wohlbefinden beizutragen, weil Kältestrahlung durch die Deckelplatte 3 hindurch auf diese Weise verringert wird, die als sehr unangenehm empfunden wird. Außerdem wird mit dieser Heizschlange bzw. mit den Heizdraht-Segmenten 13 bis 17 erreicht, dass Wärme in den Bereich des Dichtungsprofils 5 übertragen wird, so dass ein schnelles Auftauen des Dichtungsrands im Winter und damit die Funktion des Deckels 3 auch in der kalten Jahreszeit gewährleistet ist, denn dadurch wird verhindert, dass die Dichtung am Dachausschnitt 11 festsitzt. Zur Übertragung der Wärme von den Heizdraht-Segmenten 13 bis 17 zum Dichtungsprofil 5 trägt bei, dass die Heizdraht-Segmente in unmittelbarer Nachbarschaft zu dem Verstärkungsrahmen 4 angeordnet ist, der aus Blech besteht, und damit gut wärmeleitend ist bzw. eine Wärmebrücke von den Heizdraht-Segmenten 13 bis 17 zum Dichtungsprofil 5 bildet. Optional kann ein weiteres Segment 18 des Heizelements 12 im Kunststoffrahmen 8, in unmittelbarer Nähe des Dichtungsprofils 5 angeordnet sein und somit zur Erwärmung des Dichtungsprofils 5 dienen.

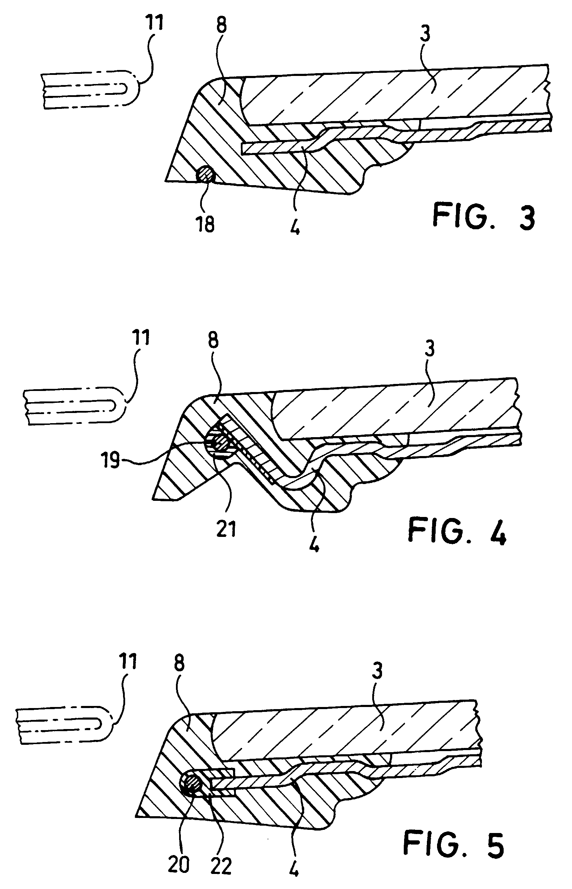

Varianten der Deckelplattenbeheizung mittels im Kunststoffrahmen 8 angeordnetem Heizelement sind in Fig. 3 bis 5 gezeigt. Diese Varianten zielen nicht darauf ab, den Innenraum bzw. den Kopfbereich von Fahrer und Beifahrer zu erwärmen, sondern dienen im wesentlichen dazu, Wärme in den Randbereich des Deckels 2 zu übertragen, um dessen Festsitzen im Dachausschnitt 11 im Winter zu verhindern bzw. zu lösen.

Während Fig. 3 und 5 Kunststoffrahmen und Verstärkungsrahmen mit identischem Querschnitt zeigen, zeigt Fig. 4 eine hiervon im Profil abweichende Variante. Auf das spezielle Profil von Verstärkungsrahmen und Kunststoffrahmen kommt es jedoch für die Erfindung nicht an.

In Fig. 3 ist im Außenrandbereich des Kunststoffrahmens 8 auf dessen Unterseite ein Heizdraht-Segment 18 angeordnet, das wie die Heizdraht-Segmente 13 bis 17 in der Ausführungsform von Fig. 2 in eine komplementär ausgebildete Vertiefung im Kunststoffrahmen eingerastet ist. Diese Vertiefung wird ähnlich wie die Vertiefung bei der Ausführungsform von Fig. 2 beim Umschäumungsvorgang erzeugt, durch welchen der Kunststoffrahmen 4 auf den Verbund aus Deckelplatte 3 und Verstärkungsrahmen 4 geschäumt wird. Das Einklipsen des Heizdrahts in die komplementär ausgebildete Vertiefung erfolgt dann nachträglich in einem getrennten Arbeitsgang. Alternativ kann der Heizdraht auch während des Umschäumens mit eingebettet werden. Entsprechende Ausführungsformen, die ein Einbetten des Heizdrahts während des Umschäumungsprozesses grundsätzlich erfordern, sind in Fig. 4 und 5 gezeigt.

Bei der Herstellung des Deckels gemäß Fig. 4 und 5 wird ein Heizdraht 19 bzw. 20 vor dem Aufschäumprozeß am Verstärkungsrahmen fixiert. Während es zu diesem Zweck grundsätzlich möglich ist, den Heizdraht 19 bzw. 20 unmittelbar an den Verstärkungsrahmen 4 zu kleben, ist aus Fig. 4 und 5 eine andere Vorgehensweise zu entnehmen, bei der der Heizdraht 19 bzw. 20 in einer Kunststoffaufnahme eingebettet ist, die mit 21 bzw. 22 bezeichnet ist. Wie in Fig. 4 gezeigt, handelt es sich bei der Kunststoffaufnahme 21 um ein allgemein zylindrisches Element mit Aufnahmehohlraum für den Heizdraht 19 und abgeflachter Verbindungsfläche zum unmittelbaren Aufbringen auf den Verstärkungsrahmen 4, beispielsweise durch Kleben auf eine ebene Fläche desselben, im dargestellten Ausführungsbeispiel am Außenende des Verstärkungsrahmens 4. Gemäß Fig. 5 ist die Kunststoffaufnahme 22 als Steckaufnahme ausgebildet und hat im Steckbereich U-förmigen Querschnitt, so dass die Kunststoffaufnahme 22 vor Umschäumen mit dem Material des Kunststoffrahmens 8 auf den Außenrand des Verstärkungsrahmens 4 aufgesteckt werden kann.

Durch die Lage der Heizdrähte 18, 19 und 20 in Fig. 3, 4 und 5 in unmittelbarer Nähe des Außenrands des Deckels 2 bzw. des Kunststoffrahmens 8 und damit in unmittelbarer Nachbarschaft zu dem in Fig. 3 bis 5 nicht gezeigten Dichtungsprofil, wird im Winter Wärme auf kurzem Weg direkt in das Dichtungsprofil und den Rand des Deckels 2 eingeleitet, wodurch ein gegebenenfalls festgefrorener Deckel rasch freikommt.

Anstelle einzelner Heizdrähte oder überlagert zu deren Heizfunktion können auch Antennen-Drähte für den Empfang von Radio oder TV, GPS-Signalen oder Telekommunikation vorgesehen sein.

Die Erfindung ist auch bei einem Kunststoffdeckel vorteilhaft verwendbar, bei dem kein separater Kunststoffrahmen an einer Deckelplatte angespritzt oder angeschäumt wird, sondern der Deckel aus einem einheitlichen Kunststoff-Material besteht, in dessen Randbereich zumindestens ein Heizelement und/oder eine Antenne integriert ist.

### Bezugszeichenliste

- 1: Fahrzeugdach
- 2: Deckel
- 3: Deckelplatte
- 4: Verstärkungsrahmen
- 5: Dichtungsprofil
- 6: Formteil
- 7: Nut
- 8: Kunststoffrahmen
- 9: Vorsprünge
- 10: Hinterschneidung
- 11: Dachausschnitt
- 12: Heizdraht
- 13: Heizdraht-Segment
- 14: Heizdraht-Segment
- 15: Heizdraht-Segment
- 16: Heizdraht-Segment
- 17: Heizdraht-Segment
- 18: Heizdraht
- 19: Heizdraht
- 20: Heizdraht
- 21: Kunststoffaufnahme
- 22: Kunststoffaufnahme

## Patentansprüche

1. Deckel (2) eines öffnungsfähigen Fahrzeugdaches (1) mit einer Deckelplatte (3) und einem randseitig an die Deckelplatte (3) gespritzten bzw. geschäumten, umlaufenden Kunststoffrahmen (8) mit einer Randspaltdichtung, **dadurch gekennzeichnet,** daß in den Kunststoffrahmen (8) zumindest ein Heizelement integriert ist.

2. Deckel nach Anspruch 1, **dadurch gekennzeichnet,** daß das Heizelement einen Heizdraht (18, 19 bzw. 20) umfaßt.

3. Deckel nach Anspruch 1 oder 2, **dadurch gekennzeichnet,** daß der Heizdraht (18, 19 bzw. 20) mäanderförmig geführt ist.

4. Deckel nach Anspruch 1 oder 2, **dadurch gekennzeichnet,** das Heizelement in eine Vertiefung auf der Unterseite und/oder der Außenseite des Kunststoffrahmens (8) eingeklipst ist.

5. Deckel nach einem der Ansprüche 1 bis 4, mit einem Verstärkungsrahmen (4), insbesondere aus Blech, der auf der Unterseite der Deckelplatte (3) angeordnet und in den Kunststoffrahmen (8) eingebettet ist, **dadurch gekennzeichnet,** daß das Heizelement am Verstärkungsrahmen (4) befestigt ist.

6. Deckel nach Anspruch 5, **dadurch gekennzeichnet,** daß das Heizelement am Außenrand des Verstärkungsrahmens (4) angeordnet ist.

7. Deckel nach Anspruch 5 oder 6, **dadurch gekennzeichnet,** daß das Heizungselement an den Verstärkungsrahmen (4) geklebt ist.

8. Deckel nach Anspruch 5, 6 oder 7, **dadurch gekennzeichnet,** daß das Heizungselement in einer auf den Außenrand des Verstärkungsrahmens (4) streckbaren Steckaufnahme angeordnet ist.

9. Deckel nach Anspruch 8, **dadurch gekennzeichnet,** daß die Steckaufnahme ein Kunststoffprofilteil ist.

10. Deckel nach einem der vorhergehenden Ansprüche, **dadurch gekennzeichnet,** daß anstelle bzw. ergänzend zu den Heizelementen Drähte von Antennen in den Kunststoffrahmen integriert sind.
